# EUROPEAN PATENT APPLICATION

(11) **EP 4 535 078 A1**
(43) Date of publication of application: **09.04.2025**
(21) Application number: 22944946.7
(22) Date of filing: 03.06.2022
(51) Int. Cl.: G02F 3/00

(54) **OPTICAL CALCULATION DEVICE AND OPTICAL CALCULATION METHOD**

(71) Applicant: NIPPON TELEGRAPH AND TELEPHONE CORPORATION, Chiyoda-ku, Tokyo 100-8116 (JP)
(72) Inventor: TAKAHASHI, Junko, Musashino-shi, Tokyo 180-8585 (JP); CHIDA, Koji, Musashino-shi, Tokyo 180-8585 (JP)
(74) Representative: Murgitroyd & Company
(86) International application number: PCT/JP2022/022689
(87) International publication number: WO 2023/233669

(57) **Abstract**

An optical computing apparatus includes a plurality of stages including one or a plurality of Mach-Zehnder interference-type optical switches, and, in this optical computing apparatus, incident light is received as input in an incident stage, a phase of the incident light changed in advance by a predetermined phase amount in accordance with a position in the incident stage, and the input light propagates in accordance with a control electric signal.

## Description

### Technical Field

The present invention relates to a memory mounting method using an optical circuit used in optical communication, an optical computing infrastructure and the like, and also relates to a computation technique using the memory mounting method.

### Background Art

In recent years, the development of nanophotonics techniques has allowed small optical circuits to be mounted and techniques for mounting of optical circuits and computing methods therefor have progressed. Optical computation elements performing computation by optical circuits include Ψ gates and Mach-Zehnder interference-type optical switches (MZI optical switches).

In an optical computation circuit of the related art, an MZI optical switch is used for computation (non-linear computation (S-box computation) of encryption) performed with reference to a table by selecting and outputting any optical signal from a plurality of optical signals (Non Patent Literature 1). Since a specific value can be selected from a certain memory value in such computation, the computation is similar to mounting of a memory.

The technique disclosed in Non Patent Literature 1 discloses a method of computing one bit of a table by selecting a path of an MZI optical switch in accordance with an input value of an electric signal from 256 kinds of input groups of light configured in the table and finally selecting one value (one bit). According to this method, an S-box that is a non-linear computation unit of the encryption computation Advanced Encryption Standard (AES) can be operated.

### Citation List

### Non Patent Literature

Non Patent Literature 1: Encryption circuit technology configured by optical logic gate, Takahashi Junko, Chida Koji, Yamakoshi Koyo Kita Shota, Shinya Akihiko, NTT Technical Journal 2021.11, pp. 59-63.

### Summary of Invention

### Technical Problem

When the MZI optical switch is used, light may travel straight (through) or intersect (cross) depending on properties of the optical switch, or the phases of input light and output light may change depending on the position of a phase shifter of the MZI. Furthermore, when the MZI optical switch is operated at multiple stages, the phase of the output result may change depending on an input value (control electric signal) of the MZI optical switch due to the influence of changes in phase caused by the plurality of MZI optical switches.

In the related art such as Non Patent Literature 1, it is not considered that the phase of input light changes after the light passes through the MZI optical switch, and the phase of the output light changes depending on the input value (control electric signal). Therefore, in a case where a bit is expressed by magnitude of an amplitude of the optical signal or a phase difference between two signals, there is a problem that it is necessary to align the phase of the output light with that of the input light through a photoelectric conversion process (to set the phase difference between the input light and the output light to 0) when an output result selected from a memory is used as an input of subsequent computation.

For example, in Non Patent Literature 1, bit determination (bit determination of "1" or "0") based on the magnitude of the amplitude of light (or the intensity of light (proportional to a square of the magnitude of the amplitude)) is performed when MixColumns that is a linear computation of AES is computed. However, since it is assumed that there is no phase difference of the input light of the computation, there is a problem that the computation result also changes when the phase changes according to the input value.

The present invention has been devised in view of the above circumstances, and an object of the present invention is to provide a technique for eliminating the phase difference between input light and output light in an optical computing apparatus.

### Solution to Problem

According to the disclosed technique, an optical computing apparatus includes a plurality of stages including one or a plurality of Mach-Zehnder interference-type optical switches, and, in this optical computing apparatus,
incident light is received as input in an incident stage, a phase of the incident light changed in advance by a predetermined phase amount in accordance with a position in the incident stage, and the input light propagates in accordance with a control electric signal.

### Advantageous Effects of Invention

According to the disclosed technique, there is provided a technique for eliminating the phase difference between input light and output light in an optical computing apparatus.

### Brief Description of Drawings

[Fig. 1] Fig. 1 is a diagram illustrating an overall configuration example of an optical computing system.
[Fig. 2] Fig. 2 is a diagram illustrating an example of an MZI optical switch.
[Fig. 3] Fig. 3 is a diagram illustrating a phase shift in the MZI optical switch.
[Fig. 4] Fig. 4 is a diagram illustrating an example of an MZI optical switch.
[Fig. 5] Fig. 5 is a diagram illustrating a configuration example of an optical output apparatus 200.
[Fig. 6] Fig. 6 is a diagram illustrating a configuration example of a control apparatus 300.
[Fig. 7] Fig. 7 is a diagram illustrating a configuration including a plurality of optical computing apparatuses 100.
[Fig. 8] Fig. 8 is a diagram illustrating a configuration including the plurality of optical computing apparatuses 100.
[Fig. 9] Fig. 9 is a diagram illustrating a configuration of the optical computing apparatus 100 according to Example 1.
[Fig. 10] Fig. 10 is a diagram illustrating a preliminary change amount for the phase of input light in Example 1.
[Fig. 11] Fig. 11 is a diagram illustrating a configuration of the optical computing apparatus 100 in Example 2.
[Fig. 12] Fig. 12 is a diagram illustrating a preliminary change amount for the phase of input light in Example 2.

### Description of Embodiments

Hereinafter, an embodiment of the present invention (the present embodiment) will be described with reference to the drawings. The embodiment to be described below is merely exemplary, and embodiments to which the present invention is applied are not limited to the following embodiment.

### (Overview of Embodiment)

In the present embodiment, in the optical computing apparatus, a phase change amount (phase difference) of an output result along a path through which light passes is computed in advance depending on an input value (control electric signal) to the MZI optical switch, and the phase of the input light is set in consideration of a change amount of a phase difference. Then, a phase difference of input or output light can be set to 0 with respect to the input value of any MZI optical switch.

Accordingly, it is not necessary to change the phase of an output result of the MZI optical switch through photoelectric conversion or the like, and thus it is possible to reduce delay and power consumption by the photoelectric conversion. The technique according to the present embodiment can be applied to, for example, general-purpose memory computation capable of extracting any value with reference to a table or the like and reading a value.

### (Example of System Configuration)

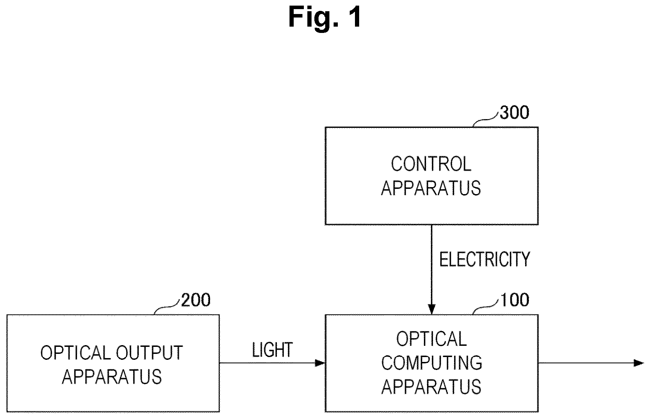

Fig. 1 illustrates an overall configuration example of an optical computing system according to the present embodiment. As illustrated in Fig. 1, the optical computing system includes an optical computing apparatus 100, an optical output apparatus 200, and a control apparatus 300.

The optical computing apparatus 100 and the optical output apparatus 200 are connected by a waveguide or an optical fiber. The control apparatus 300 and the optical computing apparatus 100 are connected by a wired line or a network capable of transmitting an electric signal. The control apparatus 300 and the optical output apparatus 200 may be connected by a network or the like.

The optical output apparatus 200 inputs an optical signal to the optical computing apparatus 100. The control apparatus 300 inputs a control electric signal to the optical computing apparatus 100. The control apparatus 300 can be realized by a general computer including a CPU and a memory.

### <MZI Optical Switch>

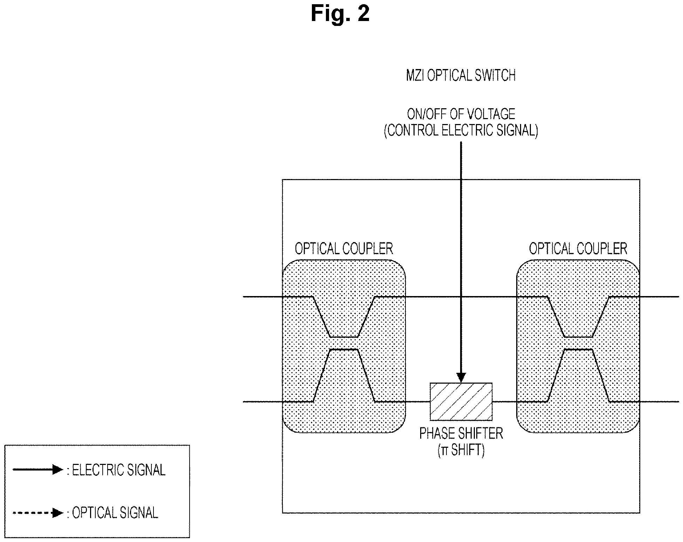

The optical computing apparatus 100 includes MZI optical switches at a plurality of stages. A connection configuration of the MZI optical switches will be described in an example. Fig. 2 illustrates a configuration example of one MZI optical switch.

As illustrated in Fig. 2, the MZI optical switch has two optical couplers and one phase shifter. The phase shifter is provided in one of two paths (arms) connecting the two optical couplers. In the example of Fig. 2, the phase shifter is provided in a lower path of the two paths.

In the MZI optical switch, it is possible to switch the path of the input light by turning on and off a voltage (control electric signal) applied to the path in which the phase shifter is embedded. At this time, the control electric signal is set to "1" when the voltage is turned on, and the control electric signal is set to "0" when the voltage is turned off.

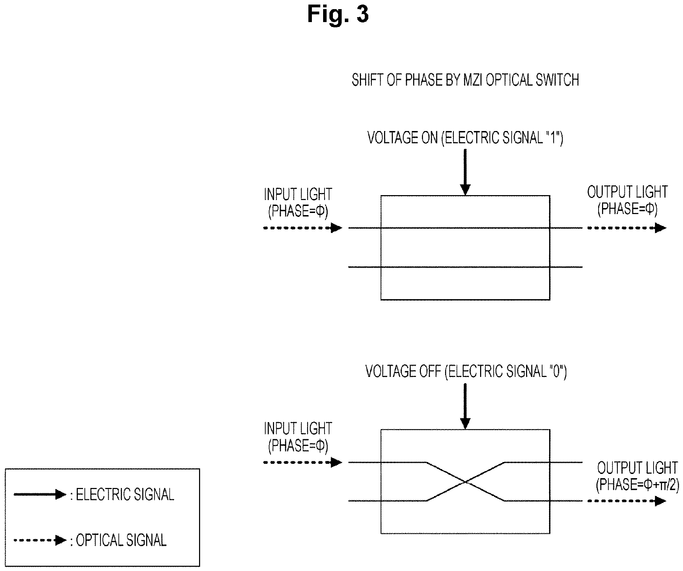

As illustrated in Fig. 3, for example, when an optical signal is input to the upper path, the optical signal is output from the straight path (upper side) at control electric signal=1. When the control electric signal=0, the optical signal is output from the intersecting (crossing) path (lower side).

Similarly, when the input light is input from the lower path, the optical signal is output from the straight path at control electric signal=1 and the optical signal is output from the intersecting (crossing) path at control electric signal=0.

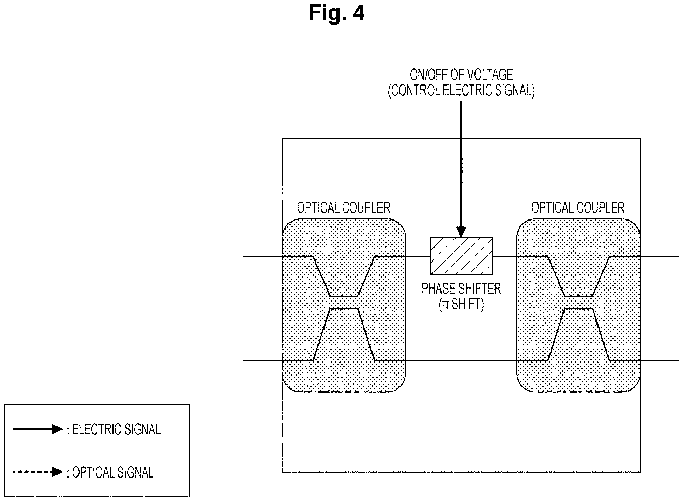

As illustrated in Fig. 4, even when the phase shifter is provided in the upper path, the optical signal is output from the straight path at control electric signal=1 and the optical signal is output from the intersecting (crossing) path at control electric signal=0, as described above.

It is known that when the input light intersects (crosses), a phase of output light is shifted by π/2 with respect to a phase of input light regardless of a position of the phase shifter or a connection method of the multistage MZI optical switches (Reference Literature: "Christi K. Madsen, Jian H. Zhao, Optical Filter Design and Analysis: A Signal Processing Approach, Wiley, ISBN: 978-0-471-18373-0 June 1999, page 432."). In the lower example of Fig. 3, the phase ϕ of the input light becomes ϕ+π/2 and is output (here, it is assumed that light is delayed by π/2). When the phase of the input light is ϕ and the input light travels straight, no phase difference occurs. That is, the phase of the output light remains at ϕ.

### <Optical Output Apparatus 200>

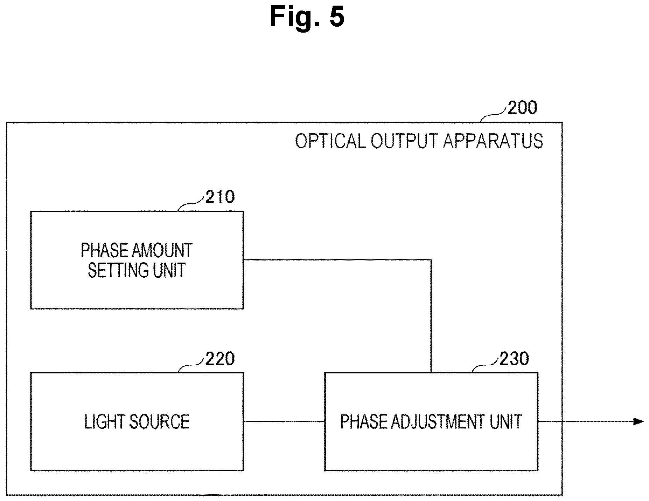

Fig. 5 illustrates a configuration example of the optical output apparatus 200. As illustrated in Fig. 5, the optical output apparatus 200 includes a phase amount setting unit 210, a light source 220, and a phase adjustment unit 230 (for example, a phase modulator).

The light source 220 may include as many light beams as the number of light beams input to the optical computing apparatus 100, or may divide the light beam from one light source 220 by the number of light beams input to the optical computing apparatus 100.

In addition, as many of the phase adjustment units 230 may be included as the number of pieces of input light to the optical computing apparatus 100, or one phase adjustment unit 230 may be included for a plurality of pieces of input light, and one phase adjustment unit 230 may perform phase adjustment for the plurality of pieces of input light.

The phase amount setting unit 210 holds the phase amount to be changed with respect to the input light for each input position to the optical computing apparatus 100, and notifies the phase adjustment unit 230 of the phase amount. The phase adjustment unit 230 changes the phase amount of the input light for each piece of input light based on the phase amount, and outputs the optical signal after the change in the phase amount to the optical computing apparatus 100.

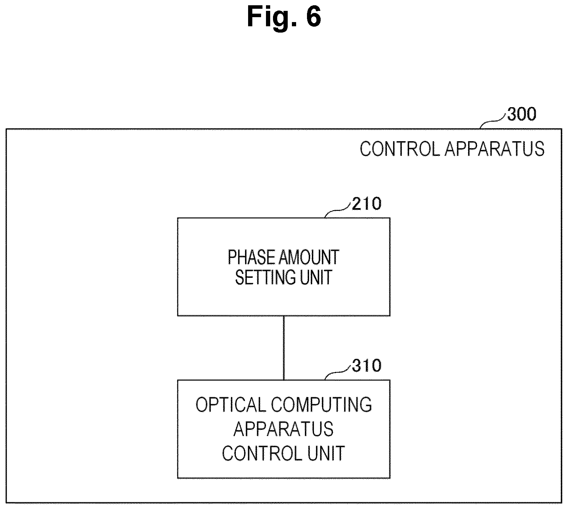

The control apparatus 300 may include the phase amount setting unit 210 in the optical output apparatus 200. A configuration example of the control apparatus 300 in that case is illustrated in Fig. 6. As illustrated in Fig. 6, the control apparatus 300 includes the phase amount setting unit 210 and an optical computing apparatus control unit 310. The optical computing apparatus control unit 310 outputs a control electric signal to the optical computing apparatus 100. The phase amount setting unit 210 notifies the optical output apparatus 200 of a phase amount to be changed for each piece of input light.

An apparatus including the "optical computing apparatus 100 and the optical output apparatus 200" may be referred to as an optical computing apparatus. An apparatus including the "optical computing apparatus 100 and the phase amount setting unit 210" may be referred to as an "optical computing apparatus". A device including the "optical computing apparatus 100 and the phase adjustment unit 230" may be referred to as an "optical computing apparatus".

The phase amount setting unit 210 in the optical output apparatus 200 and the control apparatus 300 can be realized, for example, by causing a computer having a CPU and a memory to execute a program. The program may be stored in a non-transitory storage medium such as a portable memory.

### <Multistage Configuration of Optical Computing Apparatus 100>

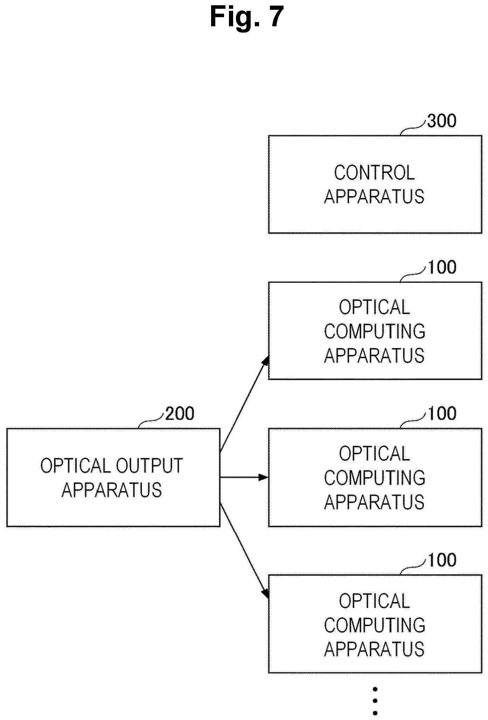

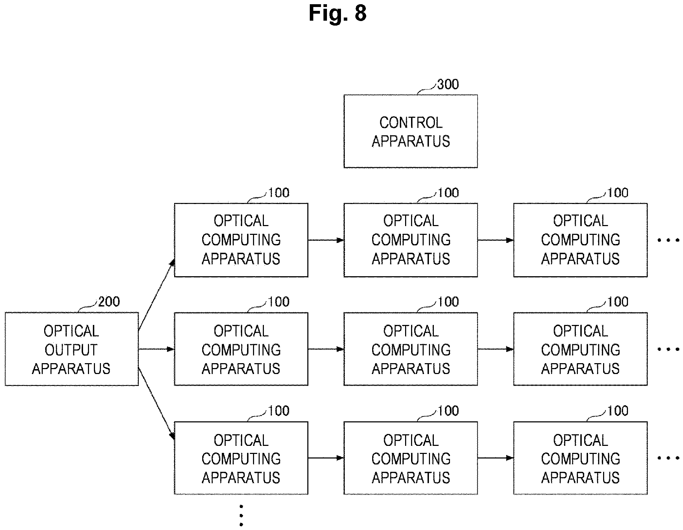

As illustrated in Fig. 7, the optical computing system may include a plurality of optical computing apparatuses 100 in parallel. As illustrated in Fig. 8, the optical computing system may be configured such that a plurality of stages including the plurality of optical computing apparatuses 100 in parallel are connected in series.

Hereinafter, Examples 1 and 2 will be described as specific examples of a configuration and an operation of the optical computing apparatus 100 in the system configuration of Fig. 1. Both Examples 1 and 2 are examples of 4-bit table conversion in which one bit is selected from 2⁴ (=16) bits for 4-bit input.

The table conversion means that an output value corresponding to an input value is set in the form of a table, and the output value corresponding to the input value is acquired from the table. n-bit table conversion is to acquire an output value for a designated input value when any of 2ⁿ input values is designated.

### (Example 1)

In Example 1, the MZI optical switch in which the phase shifter is on the lower side of the arm, as described with reference to Fig. 2, is used. In Example 1, the arm on the upper side of the output path of each MZI optical switch included in the optical computing apparatus 100 is connected to the input path of the next MZI optical switch.

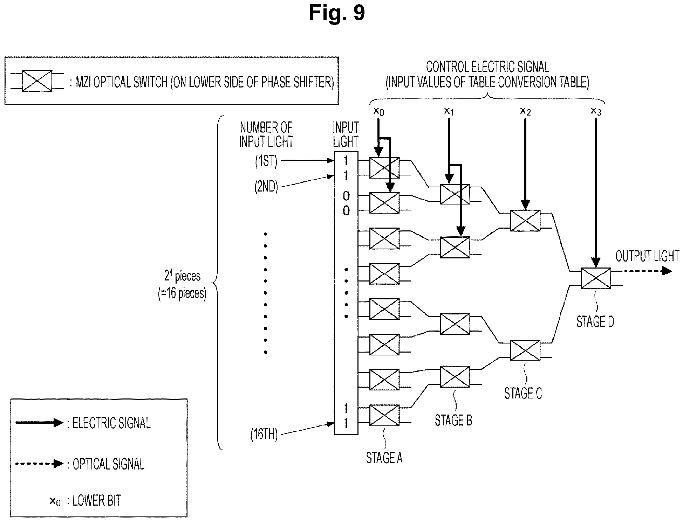

Fig. 9 illustrates a configuration of the optical computing apparatus 100 according to Example 1. As illustrated in Fig. 9, four stages of MZI optical switches are connected to perform computation of 4-bit table conversion.

That is, the light path is selected by the input value (control electric signal) {(x₃, x_{2,} x₁, or x₀)} of the table conversion, and only one piece of light among 2⁴ pieces of input light is selected and output (here, x₀ is set as a least significant bit.).

As illustrated in Fig. 9, Stage A, Stage B, Stage C, and Stage D corresponding to four bits, which are input values of the table conversion, are provided. Stage A corresponds to x₀, Stage B corresponds to x₁, Stage C corresponds to x_{2,} and Stage D corresponds to x₃.

Eight MZI optical switches are provided at Stage A, and input light is input to each of two input paths of the MZI optical switches. 16 pieces of input light correspond to 16 bits of information. For example, the input light means bit value=1, and non-input light means bit value=0.

The upper arm on the output side of each MZI optical switch at Stage A is connected to the arm (input path) on the input side of Stage B. As illustrated in Fig. 9, the upper arm on the output side in the MZI optical switch at Stage A is connected to the upper arm on the input side, the lower arm, and the like of Stage B in order from the top. The same applies to connection between Stage B and Stage C and connection between Stage C and Stage D.

At this time, it is possible to select a value in the table by setting values in the table corresponding to the 2⁴ pieces of input light. For example, when (x₃, x_{2,} x₁, x₀)=(1, 1, 1, 1), light corresponding to input light "1" at the top of Fig. 9 is output light. That is, by setting bit values respectively corresponding to the 2⁴ values (control electric signals) as input light, a bit value corresponding to a designated value among the 2⁴ values (control electric signals) can be obtained as (presence or absence of) output light.

As described above, in the MZI optical switch, when the light travels straight, the phase does not change. When the light crosses, the phase changes by π/2. That is, the phase of the output light changes depending on the path through which the input light passes. For example, when the phase of the input light is ϕ, the phase of the output light does not change (remains at ϕ) with respect to the uppermost input light ((first) in Fig. 9).

On the other hand, when (x₃, x_{2,} x₁, x₀)=(1, 1, 1, 0), the second input light from the top ((second in Fig. 9)) is output, and the phase of the output light is ϕ+π/2. This is because light passes and crosses only in the MZI optical switch at Stage A.

Accordingly, in the technique of this embodiment, by changing the phase of the input light from ϕ in advance in accordance with its input position in the optical computing apparatus 100, the phase of the output light is kept at ϕ regardless of which input light is selected for output. Here, it is assumed that the phase of each piece of input light before the change is ϕ.

Specifically, in the case of 4-bit table conversion, since the phase of the output light is shifted by (π/2) × (4-HW (X)), the phase of the input light is set to be shifted by 2π-((π/2) × (4-HW (X))). Here, HW represents a Hamming weight, and X=(x₃, x_{2,} x₁, x₀). The Hamming weight is the number of 1s in the bit string. For example, when X=(1, 1, 1, 1), HW (X)=4. When (π/2) × (4-HW (X))=0, the phase of the input light is ϕ+2π (=ϕ). When n-bit table conversion is performed, that is, when one piece of input light is output from 2ⁿ pieces of input light, the phase of the output input light may be shifted by 2π-((π/2) × (n-HW (X))).

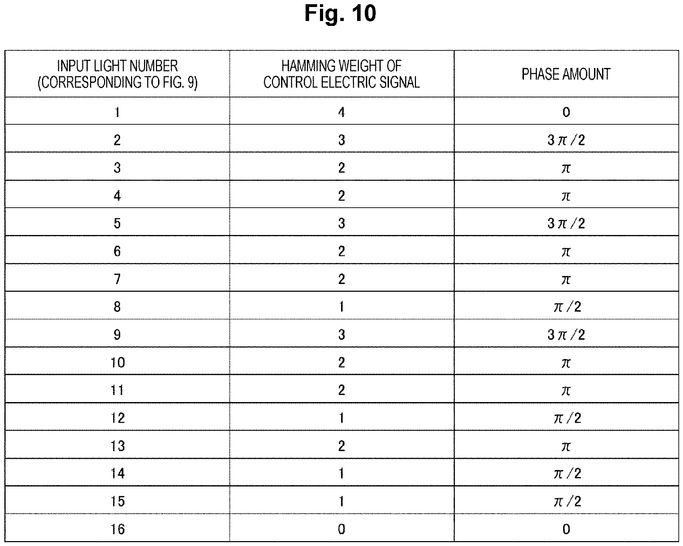

Fig. 10 illustrates a preliminary change amount of the phase of the input light in accordance with the Hamming weight when the 4-bit table conversion is performed. For example, the case of (x₃, x_{2,} x₁, x₀)=(0, 0, 0, 1) corresponds to a case where the number of the input light in Fig. 10 is 15. At this time, since 2π-((π/2)× (4-HW (X)))=2π-(3π/2)=π/2, the phase of the input light is ϕ+(π/2). That is, when the phase of the input light is input as ϕ, the phase difference of the input or output light is ϕ+(3π/2). Therefore, when the phase of the input light is ϕ+(π/2), the phase of the output light is ϕ as "ϕ+(3π/2)+(π/2)=ϕ+2π=ϕ".

As a method of changing the phase amount of the input light in advance, the phase may be changed one by one using 16 light sources, or the phase of light divided by 16 from one light source may be changed by a phase modulator. Further, bits "1" and "0" from one light source may be allocated using the MZI optical switch. However, in this case, it is necessary to consider a phase shift by the MZI optical switch of the bit allocation.

For example, when the optical output apparatus 200 illustrated in Fig. 5 is used, the phase amount setting unit 210 holds the information of the table illustrated in Fig. 10 and notifies the phase adjustment unit 230 of the phase amount to be changed for each input light in accordance with the table. The phase adjustment unit 230 outputs the input light of which the phase has been changed in advance by the notified phase amount to a corresponding input position in the optical computing apparatus 100.

In Example 1, the phase shifter is on the lower path of the MZI optical switch, and the upper path on the output side of each MZI optical switch is connected to a next stage, which is an example.

When the phase shifter is on the lower path of the MZI optical switch and the lower path on the output side of each MZI optical switch is connected to the next stage, the input light numbers and the phase amounts of the pieces of input light in Fig. 10 are reversed. For example, when an input light number is 1, the phase amount to be changed is 0. When the input light number is 2, the phase amount to be changed is π/2. When the input light number is 3, the phase amount to be changed is π/2. The phase amount to be changed is π when the input light number is 14. The phase amount to be changed is 3π/2 when the input light number is 15.

### (Example 2)

Next, Example 2 will be described. Hereinafter, differences from Example 1 will be mainly described. In Example 2, the MZI optical switch in which the phase shifter is on the upper side of the arm illustrated in Fig. 4 is used.

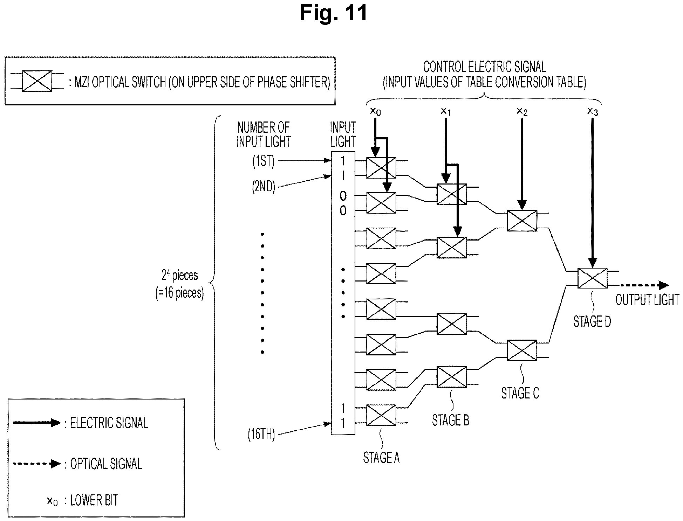

Fig. 11 illustrates a configuration of the optical computing apparatus 100 according to Example 2. As illustrated in Fig. 11, in Example 2, at each stage of the optical computing apparatus 100, the lower arm on the output side of the MZI optical switch is connected to the upper arm on the input side of the MZI optical switch of a subsequent stage. The upper arm on the output side of the MZI optical switch below the lower arm is connected to the lower arm on the input side of the MZI optical switch of the subsequent stage. Such a connection configuration is repeated for the two MZI optical switches of each stage in order from the top.

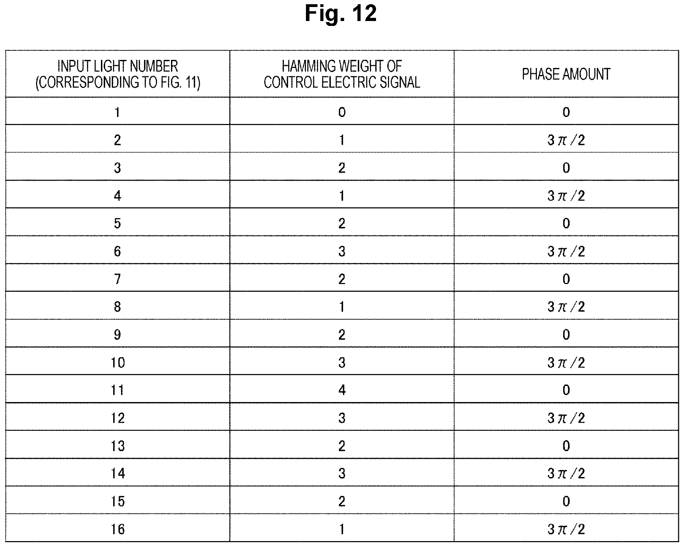

Fig. 12 illustrates a preliminary change amount of the phase of the input light in advance in accordance with the Hamming weight in the configuration illustrated in Fig. 11. As illustrated in Fig. 12, in Example 2, when the Hamming weight of the control electric signal is an odd number, the phase of the input light may be shifted by ϕ+ (3π/2). For example, when (x₃, x₂, x₁, x₀) = (1, 1, 1, 1) (corresponding to the eleventh input light), the phase difference of the input light and the output light becomes 0. Therefore, the phase shift of the input light is unnecessary.

On the other hand, when (x₃, x_{2,} x₁, x₀)=(1, 1, 1, 0) (corresponding to the twelfth input light), the phase difference between the input light and the output light is π/2. Therefore, the input light is shifted by ϕ+(3π/2). A method of changing the phase amount of the input light in advance is the same as that in Example 1.

### (Summary of Examples and Effects)

As described above, by changing the phase of input light regardless of the position of the phase shifter or the method of connecting a plurality of MZI optical switches, it is possible to set the phase difference between the input light and the output light to 0 (that is, make the phases of the input light and the output light the same). In each example, the case of 4-bit table conversion has been described, but computation can be performed by a similar scheme even in the case of n-bit table conversion.

Further, the above mounting method can be applied to S-box computation, which is non-linear computation of an encryption scheme. For example, with the technique according to the present embodiment, 8-bit S-box computation, which is non-linear computation of the encryption scheme AES, and 4-bit S-box computation of the encryption scheme PRESENT is possible. As a result, the phase of the optical signal after the S-box computation does not change, and subsequent computations can be performed correctly.

That is, since the phase difference between input light and output light can be eliminated by the technique according to the present embodiment, it is possible to correctly perform the computation after selection of any value from the memory or after the S-box computation of the encryption computation. Since the photoelectric conversion process becomes unnecessary after the computation, it is possible to reduce computation delay and power consumption.

### (Supplements)

In the present specification, at least the following optical computing apparatuses and optical computing methods are disclosed.

### (Supplement 1)

An optical computing apparatus including:
a plurality of stages including one or a plurality of Mach-Zehnder interference-type optical switches,
in which incident light is received as input in an incident stage, a phase of the incident light changed in advance by a predetermined phase amount in accordance with a position in the incident stage, and the input light propagates in accordance with a control electric signal.

### (Supplement 2)

The optical computing apparatus according to Supplement 1, in which the phase of the incident light is changed in advance such that a phase difference between the incident light and output light exiting the optical computing apparatus is 0.

### (Supplement 3)

The optical computing apparatus according to Supplement 1 or 2,
in which the plurality of stages correspond to a plurality of bits of the control electric signal, and
in which the plurality of stages are connected such that a part of the incident light is selected, from among a plurality of parts of the incident light received in the incident stage, in accordance with the control electric signal, and output as output light.

### (Supplement 4)

The optical computing apparatus according to any one of Supplement 1 to Supplement 3, further including a phase adjustment unit configured to change the phase of the incident light by the predetermined phase amount.

### (Supplement 5)

An optical computing method executed by an optical computing apparatus including a plurality of stages including one or a plurality of Mach-Zehnder interference-type optical switches, the method including:
receiving incident light as input in an incident stage, a phase of the incident light changed in advance by a predetermined phase amount in accordance with a position of the incident light; and
causing the input light to propagate in accordance with a control electric signal.

Although the present embodiment has been described above, the present invention is not limited to specific embodiments, and various modifications and changes can be made within the scope of accompanying claims.

### Reference Signs List

- 100: Optical computing apparatus
- 200: Optical output apparatus
- 210: Phase amount setting unit
- 220: Light source
- 230: Phase adjustment unit
- 300: Control apparatus
- 310: Optical computing apparatus control unit

## Claims

1. An optical computing apparatus comprising:
a plurality of stages including one or a plurality of Mach-Zehnder interference-type optical switches,
wherein incident light is received as input in an incident stage, a phase of the incident light changed in advance by a predetermined phase amount in accordance with a position of the incident light, and the input light propagates in accordance with a control electric signal.

2. The optical computing apparatus according to claim 1, wherein the phase of the incident light is changed in advance such that a phase difference between the incident light and output light exiting the optical computing apparatus is 0.

3. The optical computing apparatus according to claim 1,
wherein the plurality of stages correspond to a plurality of bits of the control electric signal, and
wherein the plurality of stages are connected such that a part of the incident light is selected, from among a plurality of parts of the incident light received in the incident stage, in accordance with the control electric signal, and output as output light.

4. The optical computing apparatus according to claim 1, further comprising a phase adjustment unit configured to change the phase of the incident light by the predetermined phase amount.

5. An optical computing method executed by an optical computing apparatus including a plurality of stages including one or a plurality of Mach-Zehnder interference-type optical switches, the method comprising:
receiving incident light as input in an incident stage, a phase of the incident light changed in advance by a predetermined phase amount in accordance with a position of the incident light; and
causing the input light to propagate in accordance with a control electric signal.
